# EUROPEAN PATENT SPECIFICATION

(11) **EP 3 002 193 B1**
(45) Date of publication and mention of the grant of the patent: **18.04.2018**
(21) Application number: 15185113.6
(22) Date of filing: 14.09.2015
(51) Int. Cl.: B62J 35/00

(54) **STRADDLE TYPE VEHICLE**
FAHRZEUG MIT SATTEL
VÉHICULE À CALIFOURCHON

(30) Priority: 01.10.2014 JP 2014202784
(43) Date of publication of application: 06.04.2016
(73) Proprietor: Yamaha Hatsudoki Kabushiki Kaisha, Shizuoka-ken Shizuoka 438-8501 (JP)
(72) Inventor: Miyamoto, Masatoshi, Shizuoka, Shizuoka 438-8501 (JP); Iida, Kazuya, Shizuoka, Shizuoka 438-8501 (JP); Suzuki, Takaharu, Shizuoka, Shizuoka 438-8501 (JP); Mitsui, Noboru, Shizuoka, Shizuoka 438-8501 (JP)
(74) Representative: Moreland, David

(56) References cited:
- EP-A2- 1 659 054
- CN-U- 203 222 073
- DE-A1-102007 009 113
- JP-A- 2010 162 990
- JP-A- 2012 001 046
- JP-A- 2014 069 696
- Matthias Oesterreich: "Aluminium fuel tanks for motorcycles", Ducati 2012 - 5th International Conference Development Trends of Motorcycles , 18 October 2012 (2012-10-18), 19 October 2012 (2012-10-19), pages 1-11, XP002752315, Retrieved from the Internet: URL:http://www.fh-zwickau.de/fileadmin/ugr oups/ftz/Konferenzen/Ducati_2012/09_BMW_Oe sterreich.pdf [retrieved on 2015-12-16]
- FastEddieb: "Re:K75 Fuel Tank Mystery", I-BMW.com -The Ultimate BMW Sport Touring Portal , 21 April 2012 (2012-04-21), XP002752327, Retrieved from the Internet: URL:http://www.i-bmw.com/showthread.php?t= 39158 [retrieved on 2015-12-17]
- Rita Lammers: "Alu-Tanks made in Germany", Rita Lammers- Motorradteile , 24 April 2011 (2011-04-24), XP002752317, Retrieved from the Internet: URL:https://web.archive.org/web/2011042421 4344/http://www.alu-tanks.de/41398.html [retrieved on 2016-11-16]
- Anonymous: "Handgefertigte Aluminiumtanks für Motorräder", CMT-Motorradtankbau , 25 July 2014 (2014-07-25), XP002752318, Retrieved from the Internet: URL:https://web.archive.org/web/2014072523 3940/http://cmt-motorradtankbau.de/ [retrieved on 2015-12-16]

## Description

### FIELD OF THE INVENTION

The present invention relates to a straddled vehicle or a straddle-type or saddle-ride vehicle. The invention more particularly relates to a straddled vehicle including a fuel tank produced by press-molding using a sheet of an aluminum-based material.

### BACKGROUND OF THE INVENTION

A motorcycle is an example of a straddled vehicle. The motorcycle includes a fuel tank.

Iron has been known as a typical conventional material for a fuel tank. In order to produce a lightweight fuel tank, an aluminum-based material (e.g. aluminum or an aluminum alloy) is used as a material for a fuel tank in some cases. In the following description, the aluminum-based material will be simply referred to as aluminum.

An aluminum fuel tank is produced, for example, by a press-molding method. For example, an aluminum sheet is made into a plurality of panels by press-molding, and the panels are put together to manufacture an aluminum fuel tank.

Aluminum and iron have different material properties relating to press-molding (press-moldability). When an aluminum sheet is formed into a panel by press-molding, the panel ends up having wrinkles on its outer surface in some cases. This is because an aluminum sheet has a lower r value than iron, and wrinkles are hardly absorbed in association with tensile deformation. Here, the r value is an index that represents a ratio of reduction in the sheet thickness between the thickness direction and the surface direction, also called Lankford value. Moreover, aluminum has a lower Young's modulus than iron and greater distortion than iron in response to the same load applied, and therefore its spring back is large.

The part of an outer surface of a panel to have wrinkles by press-molding can be predicted to some extent. For example, wrinkles are often generated at a part where a concave surface and a convex surface are formed in close proximity at an outer surface of a panel. An excess amount of material tends to gather during press-molding at such a part where a concave surface and a convex surface are formed close to each other. The excess amount of material is likely to cause wrinkles at the outer surface of the panel.

Wrinkles on the panel generated by press-molding can be corrected in a succeeding step to the press-molding step. However, not only would additional man hours for correcting the wrinkles be necessary, it would also be difficult to completely correct the wrinkles by this method. Corrected parts may be noticeable in some cases when the fuel tank is coated with paint. The wrinkles may also lower the rigidity of the fuel tank. Moreover, the wrinkles may be transferred to the press die, which may shorten the useful life of the press die.

One method of reducing the wrinkles would be to limit the design of a fuel tank to a simple shape. However, a fuel tank for use in a straddled vehicle constitutes a part of the design of the straddled vehicle. A fuel tank in a simple shape limits the design of the straddled vehicle as a whole. In order to secure flexibility in the design of a straddled vehicle, even using aluminum, the fuel tank should be designed with about the same degree of flexibility as that achieved using iron.

JP 4136322 B discloses a technique for providing a deformed part near a corner of a container. The deformed part suppresses plastic flow of a metal sheet material to the corner having a convex surface during drawing. The deformed part has a convex or concave shape that extends from the opening of the container to the bottom wall.

The technique disclosed by JP 4136322 B is applicable to a relatively simple shaped container such as an automobile fuel tank. The automobile fuel tank is not generally a part of the outer appearance of the automobile. Therefore, the deformed part formed at a side wall of the automobile fuel tank does not affect the appearance of the automobile. On the other hand, a fuel tank for use in a straddled vehicle forms a part of the appearance of the straddled vehicle. Therefore, if the disclosed technique is applied to a fuel tank for a straddled vehicle, there would be much effect on the appearance of the straddled vehicle. It is therefore difficult to apply the disclosed technique to a fuel tank for a straddled vehicle.

As described above, when a panel that forms an aluminum fuel tank is produced by press-molding, wrinkles may be generated at a part of an outer surface of the panel where a concave surface and a convex surface are formed adjacent to each other.

An object of the present invention is to reduce wrinkles generated at an outer surface of a panel for an aluminum fuel tank that forms a part of the appearance of a straddled vehicle when the panel is produced by press-molding.

It is an object of at least one embodiment of at least one aspect of the present invention to obviate or at least mitigate one or more problems or disadvantages in the prior art.

EP 1 659 054 (YAMAHA), on which the preamble of claim 1 is based, discloses a motorcycle fuel tank including an upper shell, and a lower shell including a body and fixing portions. The lower shell body is bonded to the upper shell and arranged to define a fuel storage space with the upper shell. The fixing portions are used to fix the lower shell body onto a motorcycle body. The lower shell is made of an aluminum alloy and the lower shell body and the fixing portions are formed by a casting process such that the fixing portions are integral with the lower shell.

### SUMMARY OF INVENTION

Various aspects of the present invention are defined in the independent claims. Some preferred features are defined in the dependent claims. According to a first aspect of the present invention is provided a fuel tank for a straddled vehicle. The fuel tank being an aluminum-based fuel tank. The fuel tank comprises or is formed from aluminum, aluminum alloy or a compound containing or comprising aluminum. The fuel tank comprise a panel, formed by press-molding, using a sheet of an aluminum-based material. The panel being configured to form a space for storing fuel. The panel has a first region and a second region. The second region being configured to be visible in an outer appearance of the straddled vehicle in a side view and a plan view of the straddled vehicle, in use. The second region comprises a concave surface at, in or on an outer surface thereof. The second region also comprise a convex surface, adjacent to the concave surface at the outer surface. The second region comprises a bent part formed at the concave surface to reduce wrinkles generated at the concave surface when the panel is produced. The bent part being formed in a recessed or raised shape at, in or on the outer surface of the concave surface. According to a second aspect of the present invention is provided a straddled vehicle, comprising:
a vehicle body frame; the aluminum fuel tank of the first aspect, wherein said aluminum fuel tank is attached to the vehicle body frame;
a cover provided to cover a part of the aluminum fuel tank; and
a seat attached to the vehicle body frame to cover a part of a rear part of the aluminum fuel tank, wherein the first region of the panel of the fuel tank is covered with the cover and the seat in a side view and a plan view of the straddled vehicle, and wherein the second region of the panel of the fuel tank second region that is not covered with the cover and the seat. The part having the bent part may have an increased surface area at the outer surface of the panel. The surface area of the concave surface may be increased by the bent part, so that the outer surface of the panel may more likely be extended during press-molding. This may reduce wrinkles generated at the outer surface of the panel.

The second region may comprise a plurality of curved surfaces. The second region may comprise a ridge. The ridge may connect the plurality of curved surfaces. The plurality of curved surfaces may be, comprise or be comprised in the concave surface and/or the convex surface.

The second region may comprise first and second concave surfaces, which may form the concave surface. The concave surface may have a part, such as the second concave surface, adjacent to the ridge. The second concave surface may be provided above, overhead of or higher than the convex surface, e.g. in a side view of the vehicle.

The second region may comprise first and second convex surfaces, which may form the convex surface. The concave surface, e.g. the first concave surface, may be formed to connect the first and second convex surfaces. The second convex surface may be provided above, overhead of or higher than the first convex surface, e.g. in a side view of the vehicle.

The ridge may connect the concave surface, e.g. the second concave surface, and the convex surface, e.g. the second convex surface.

The bent part may have a part having greater deformation near the ridge than away from the ridge.

The panel may comprise a first panel, which may form an upper part of the space of the aluminum fuel tank for storing fuel. The first panel may have an upper surface and may have a pair of side surfaces, which may be continuous with the upper surface. The side surfaces may be opposed or oppose each other in a first direction. A second direction may be a direction that is orthogonal to the first direction.

The pair of side surfaces may comprise a third region. The third region may have a size in the first direction that is reduced or reduces in the second direction, e.g. from one end to the other end of the first panel in the second direction. The third region may at least partly overlap the second region.

The third region may have the first convex surface, the second convex surface and/or the concave surface. The second convex surface may be positioned under, directly under or below the first convex surface, e.g. in a side view. The concave surface, e.g. the first concave surface, may connect the first and second convex surfaces. The bent part may be formed at, on or in the concave surface.

The third region may comprise a side recess, which may be formed by a part of the first convex surface, a part of the second convex surface, and/or a part of the concave surface. The bent part may be formed at, on or in the side recess.

The first direction may correspond to a left-right direction of the straddled vehicle. The second direction may correspond to a front-back direction of the straddled vehicle. The side recess may be formed ahead or forwardly of a front end of the seat. The straddled vehicle may comprise a plurality of side recesses, e.g. left and right side recesses. The side recesses may be formed in symmetrical positions with respect to a center line extending in the front-back direction of the straddled vehicle in a side view and/or a plan view of the straddled vehicle. The straddled vehicle may comprise a plurality of bent parts, e.g. left and right bent parts. The bent parts may be formed in symmetrical positions with respect to the center line extending in the front-back direction of the straddled vehicle.

The upper surface may have a fourth region having a size in an up-down direction reduced or which reduces in the second direction, e.g. from one end to the other end of the first panel in the second direction. The fourth region may at least partly overlap the second region.

The fourth region may comprise the first convex surface, the second convex surface and/or the concave surface. The second convex surface may be positioned nearer to said other end with respect to the first convex surface. The concave surface may connect the first convex surface and the second convex surface. The bent part may be formed at, on or in the concave surface. The bent part may be formed at, on or in the deepest position of the concave surface.

The bent part may have one or more, e.g. a plurality of, recesses. The one or more recesses may be arranged or distributed in the first direction. The one or more recesses may have a greater size in the first direction than in the second direction.

The panel may comprise a stepped part. The stepped part may be formed at least partly or entirely around a main body of the panel. At the stepped part, a surface, e.g. outer surface, of the panel main body may change stepwise, e.g. by one step. The amount of change in the position of the surface of the panel main body at the stepped part may be, for example, in the range of 2 mm to 5 mm.

At least one or each of the side surfaces may comprise a center part, which may be at the center of the respective side surface in a side view or forward/back direction. The side recess may extend backward, behind, directly behind or rearwardly from the center part of the side surface in a side view. The bent part may extend in the front-back direction behind, directly behind or rearwardly of the center part of the side surface in a side view. The distance between the side surfaces in the left-right direction may decrease behind the center part of the side surfaces in a plan view. The concave and/or convex surface may be provided behind, directly behind and/or rearwardly of the center part in a plan view and/or a side view of the vehicle.

### BRIEF DESCRIPTION OF DRAWINGS

Embodiments of the present invention will now be described, by way of example only, with reference to the accompanying drawings, which are:
- Figure 1: a left side view of a motorcycle according to an embodiment of the present invention;
- Figure 2: a perspective view of first and second panels that form an aluminum fuel tank of the motorcycle of Figure 1.
- Figure 3: a plan view of the aluminum fuel tank;
- Figure 4: a left side view of the aluminum fuel tank;
- Figure 5: a rear sectional view taken along line A-A in Figure 4;
- Figure 6: a plan view of the first panel;
- Figure 7: a left side view of the first panel;
- Figure 8: a rear sectional view taken along line B-B in Figure 7;
- Figure 9: a rear sectional view taken along line C-C in Figure 7;.
- Figure 10: a top sectional view taken along line D-D in Figure 7;
- Figure 11: an enlarged view of a bent part formed at a side surface of the first panel;
- Figure 12: a side sectional view taken along line E-E in Figure 6;
- Figure 13: an enlarged view of a bent part formed at an upper surface of the first panel; and
- Figure 14: a perspective view of the first panel according to another embodiment of the invention.

### DESCRIPTION OF THE EMBODIMENTS

Now, a straddled vehicle according to an embodiment of the present invention will be described in conjunction with the accompanying drawings. In the description, the straddled vehicle refers to a motorcycle, a three-wheeled vehicle, and a four-wheeled vehicle including a power unit. In the following, a sports type motorcycle will be described as an example of the straddled vehicle according to the embodiment. In the drawings, the same or corresponding portions are designated by the same reference characters and their description will not be repeated.

### Overall Structure

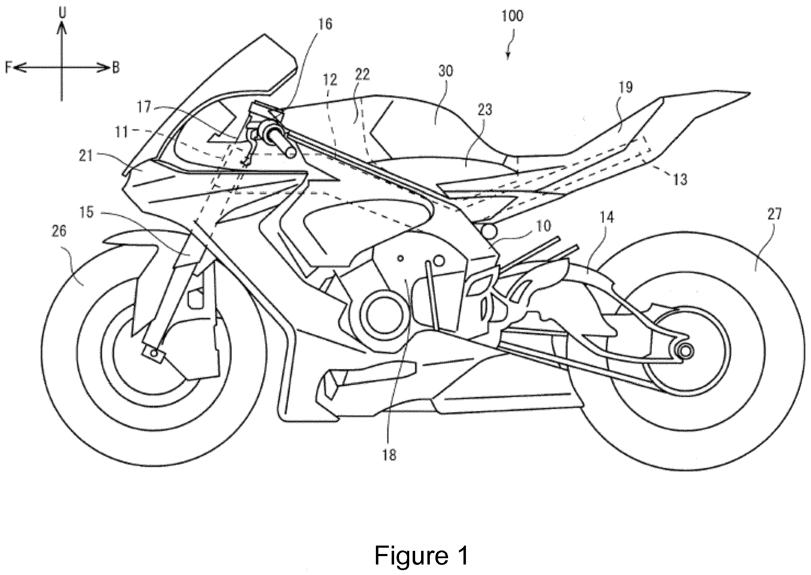

Figure 1 is a left side view of the motorcycle 100. In the following description, the front, back, left, and right refer to these positions as viewed by a rider seated on a seat 19 of the motorcycle 100. In the drawings, the arrow F indicates a forward direction of the motorcycle 100, and the arrow B indicates a backward direction of the motorcycle 100. The arrow U indicates an upward direction of the motorcycle 100.

The motorcycle 100 includes a vehicle body frame 10, a power unit 18, a front wheel 26, a rear wheel 27, and an aluminum fuel tank 30. Hereinafter, the aluminum fuel tank 30 will also be simply referred to as the fuel tank 30.

The vehicle body frame 10 includes a head pipe 11, tank frames 12, rear frames 13, and rear arms 14. The head pipe 11 is provided at a front part of the motorcycle 100. The tank frames 12 are formed as a pair of left and right tank frames. The tank frames 12 extend backward from the head pipe 11. In a side view of the motorcycle 100, the left and right tank frames 12 have curved parts that extend downward. The left and right rear frames 13 are respectively connected to the curved parts of the respective tank frames 12. The rear arms 14 are connected to rear ends of the tank frames 12.

The head pipe 11 has a steering shaft 17 rotatably inserted therein. A handle 16 is connected to an upper part of the steering shaft 17. A front fork 15 is attached to the steering shaft 17 through a bracket (not shown). The front wheel 26 is supported rotatably at a lower end of the front fork 15. The front wheel 26 turns to the left and right as the handle 16 is operated.

The rear wheel 27 is supported rotatably at rear ends of the rear arms 14. The rear wheel 27 rotates as motive power from the power unit 18 is transmitted thereto.

The fuel tank 30 is attached to the tank frames 12 and the rear frames 13. In a side view of the motorcycle 100, the seat 19 is disposed behind the fuel tank 30. A front part of the seat 19 covers a part of a rear part of the fuel tank 30.

A front cowl 21 is provided ahead or forwardly of the handle 16. A cover 22 is provided behind the handle 16. A rear part of the cover 22 covers a part of a front part of the fuel tank 30. A pair of left and right side covers 23 is provided under the cover 22. The side covers 23 are attached to the tank frames 12 and the rear frames 13. The side covers 23 cover a part of a lower part of the fuel tank 30 in a side view of the motorcycle 100.

The part of the fuel tank 30 covered with the seat 19, the cover 22, and the side covers 23 is not visible in the outer appearance of the motorcycle 100 in a side view and a plan view. In other words, the part is not visible as part of the appearance of the motorcycle 100 in a side view and a plan view. On the other hand, the part of the fuel tank 30 not covered with the seat 19, the cover 22, and the side covers 23 is visible in the outer appearance of the motorcycle 100 in a side view and a plan view.

### Fuel Tank

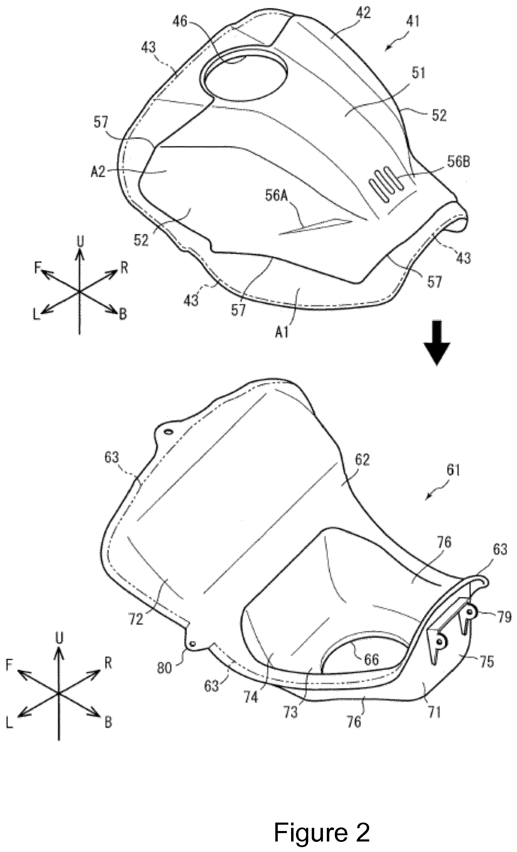

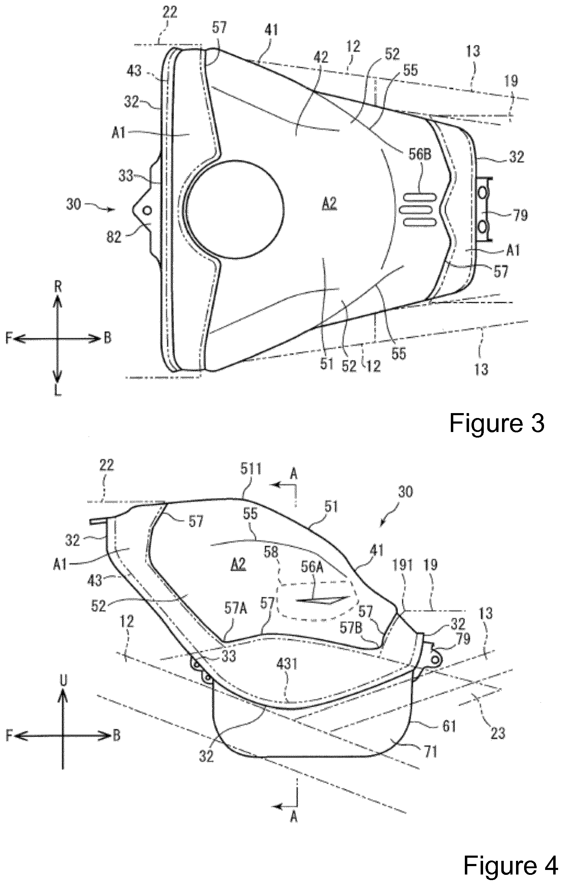

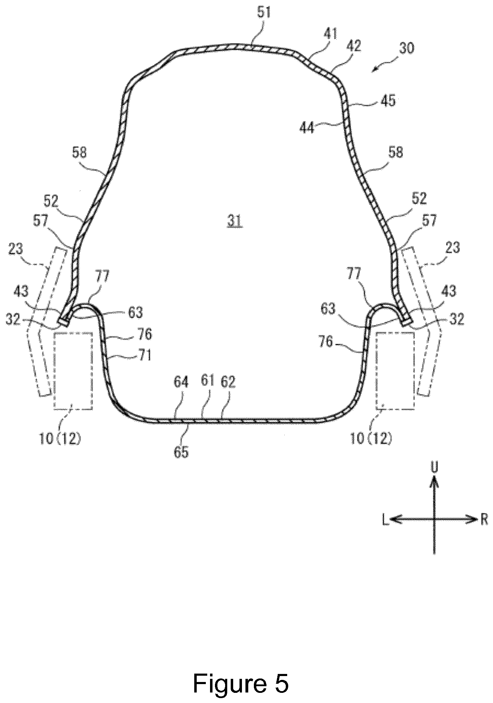

Now, the fuel tank 30 will be described. Figure 2 is a perspective view of first and second panels 41 and 61 that form the fuel tank 30. Figure 3 is a plan view of the fuel tank 30. Figure 4 is a left side view of the fuel tank 30. Figure 5 is a rear sectional view taken along line A-A in Figure 4. According to the embodiment, top-bottom, front-back, and left-right directions of the fuel tank 30 refer to these directions when the fuel tank 30 is provided in the motorcycle 100. In the drawings, the arrow R indicates a rightward direction, and the arrow L indicates a leftward direction.

General structures of the first and second panels 41 and 61 that form the fuel tank 30 will be described. The first panel 41 will be described first. As shown in Figure 2, the first panel 41 includes a first panel main body 42 and a first flange 43. The first panel main body 42 includes an upper surface 51 and a pair of side surfaces 52. The upper surface 51 forms an upper part of the first panel main body 42 from the front part to the rear part. The pair of side surfaces 52 forms a side part of the first panel main body 42 from the front part to the rear part. The side surfaces 52 are formed continuously with the upper surface 51. The side surfaces 52 are opposed in the left-right direction.

The first flange 43 is formed continuously with an end of the first panel main body 42. The first flange 43 is formed to entirely surround the first panel main body 42. The width of the first flange 43 or the distance from an arbitrary edge of the first flange 43 to an end of the first panel main body 42 is for example from 3 mm to 10 mm. The first flange 43 is formed to combine the first panel 41 with the second panel 61.

The first panel main body 42 has a stepped part 57. The stepped part 57 is formed entirely around the first panel main body 42. At the stepped part 57, the position of the surface of the first panel main body 42 changes stepwise by one step. The amount of change in the position of the surface at the stepped part 57 is, for example, from 2 mm to 5 mm. For example, at a front part of the upper surface 51, the position of the surface of the part ahead of the stepped part 57 is 3 mm to 4 mm lower stepwise in the downward direction than the position of the surface of the part behind the stepped part 57 in the vicinity of the stepped part 57.

The stepped part 57 is formed to reduce the step between the first panel 41 and the seat 19, the cover 22, and the side covers 23 when the fuel tank 30 is provided in the motorcycle 100, and the seat 19, the cover 22, and the side covers 23 are placed on the rear part, front part, and lower parts of the side surfaces of the fuel tank 30, respectively. Stated differently, the stepped part 57 defines a boundary between the part of the first panel 41 covered with the seat 19, the cover 22, and the side covers 23 and not visible in the outer appearance of the motorcycle 100 and the part of the first panel 41 not covered with the seat 19, the cover 22, and the side covers 23 and visible in the outer appearance of the motorcycle 100 while the fuel tank 30 is provided in the motorcycle 100.

More specifically, the part of the first panel 41 positioned nearer to the edge than the stepped part 57 of the first panel main body 42 and the first flange 43 are covered with the seat 19, the cover 22, and the side covers 23 and is therefore not visible in the outer appearance of the motorcycle 100 in a side view and a plan view of the motorcycle 100. Hereinafter, the region of the first panel 41 that is not visible in the outer appearance of the motorcycle 100 will be referred to as a first region A1.

The part of the first panel 41 surrounded by the stepped part 57 is not covered with the seat 19, the cover 22, and the side covers 23 and is therefore visible in the outer appearance of the motorcycle 100 in a side view and a plan view of the motorcycle 100. Hereinafter, the region of the first panel 41 that is visible in the outer appearance of the motorcycle 100 will be referred to as a second region A2. The stepped part 57 defines a boundary between the first region A1 and the second region A2.

A bent part 56A is formed at the side surface 52 of the first panel main body 42. The upper surface 51 of the first panel main body 42 has a bent part 56B. The bent parts 56A and 56B are formed to reduce wrinkles generated when the first panel 41 is produced by press-molding.

The upper surface 51 of the first panel 41 has an opening 46. A fuel feed portion (not shown) is attached to the opening 46. The fuel feed portion includes a fuel inlet and a cap that closes/opens the fuel inlet.

Now, the second panel 61 will be described. As shown in Figure 2, the second panel 61 includes a second panel main body 62 and a second flange 63. The second panel main body 62 includes a base part 71 and a front wall 72. The base part 71 has a bottom part 73, a front part 74, a rear part 75, and a pair of side parts 76. The front wall 72 is formed continuously with the front part 74 of the base part 71.

The second flange 63 is formed continuously with the edge of the second panel main body 62. The second flange 63 is formed to entirely surround the second panel main body 62. The width of the second flange 63, in other words, the distance from an arbitrary edge of the second flange 63 to the edge of the second panel main body 62 is for example from 3 mm to 10 mm. The second flange 63 is formed to combine the second panel 61 with the first panel 41.

The second panel 61 includes attachment portions 79 and 80. The attachment portions 79 and 80 are used to secure the fuel tank 30 to the rear frames 13 and the tank frames 12.

An opening 66 is formed at the bottom part 73 of the base part 71. A support (not shown) is attached to the opening 66. The support supports a fuel pump (not shown) disposed in the fuel tank 30.

The first and second panels 41 and 61 are produced by press-molding using sheet metal of an aluminum-based material. The press-molded, first and second panels 41 and 61 are combined with each other and put together by welding the first and second flanges 43 and 63 together around the entire periphery.

Referring to Figures 3, 4, and 5, the fuel tank 30 will be described. In Figures 3, 4, and 5, the pair of left and right tank frames 12 and the pair of left and right rear frames 13 are indicated by virtual lines. The virtual lines show the positional relation between the fuel tank 30 and the tank frames 12 and the rear frames 13 while the fuel tank 30 is attached to the tank frames 12 and the rear frames 13.

As shown in Figure 3, the first panel 41 that forms the fuel tank 30 has a greater width at the front part than at the rear part in the left-right direction in a plan view. The distance between the side surfaces 52 of the first panel 41 in the left-right direction gradually decreases from the front part to the rear part in a plan view. The fuel tank 30 is attached to extend between the pair of left and right tank frames 12 and the pair of left and right rear frames 13.

The first and second panels 41 and 61 are connected by a joint 32. The joint 32 is formed by welding the first and second flanges 43 and 63 together entirely around the first and second panels 41 and 61.

In a plan view, the stepped part 57 is visible at the front and rear parts of the first panel main body 42. The part of the front part ahead of the stepped part 57 is covered with the cover 22 while the tank 30 is provided in the motorcycle 100. The part of the rear part behind the stepped part 57 is covered with the seat 19 while the fuel tank 30 is provided in the motorcycle 100. The part behind the stepped part 57 provided at the front part of the first panel main body 42 and ahead of the stepped part 57 provided at the rear part of the first panel main body 42 corresponds to the second region A2 that is visible in the outer appearance of the motorcycle 100.

The upper surface 51 of the first panel main body 42 has the bent part 56B. The bent part 56B is formed ahead of the stepped part 57 formed at the rear part of the first panel main body 42. The bent part 56B is formed in the second region A2. More specifically, the bent part 56B is visible in the appearance of the motorcycle 100.

As shown in Figure 4, in a side view, the upper surface 51 of the first panel 41 curves upward. More specifically, a middle part 511 positioned between a front end and a rear end of the first panel 41 is the highest. The height of the upper surface 51 gradually increases in the up-down direction from the front end to the middle part 511 and gradually decreases from the middle part 511 to the rear end.

In the first flange 43 of the first panel 41, a middle part 431 curves to project downward in a side view. More specifically, the first flange 43 is inclined obliquely downward from the front part to the middle part 431 and obliquely upward from the middle part 431 to the rear part. The fuel tank 30 is attached so that the first flange 43 does not interfere with the tank frames 12 and the rear frames 13.

The stepped part 57 extends downward from the upper part at the front part of the side surface 52 and upward from the lower part at the rear part in a side view. The stepped part curves upward in the center of the side surface 52. The cover 22 is placed over the part ahead of and above a connection portion 57A where the front part of the stepped part 57 and the middle part of the stepped part 57 are connected. The seat 19 is placed over the part behind and above a connection portion 57B where the rear part of the stepped part 57 and the middle part of the stepped part 57 are connected. The side covers 23 are placed over the part below the connection portions 57A and 57B. The part not covered with the cover 22, the seat 19, and the side covers 23 corresponds to the second region A2 that is visible in the outer appearance of the motorcycle 100.

The bent part 56A is formed at the side surface 52 of the first panel main body 42. The bent part 56A is formed in the second region A2 and therefore visible in the outer appearance of the motorcycle 100.

As shown in Figure 5, the first and second panels 41 and 61 form a space 31 that stores fuel inside the fuel tank 30. The first panel 41 defines an upper part of the space 31 that stores fuel. The second panel 61 defines a lower part of the space 31 that stores fuel. An inner surface 44 of the first panel 41 and an inner surface 64 of the second panel 61 face the space 31 that stores fuel. An outer surface 45 of the first panel 41 and an outer surface 65 of the second panel 61 face the outside of the fuel tank 30.

The base part 71 of the second panel 61 is provided in a space between the left and right tank frames 12 and the left and right rear frames 13. A connection portion 77 is formed at each of upper parts of the pair of side parts 76 of the second panel 61. In a sectional view, the connection portion 77 is formed to curve outward and downward with respect to the side part 76 of the base part 71. The connection portion 77 corresponds to or faces the side surface 52 of the first panel 41. More specifically, the connection portion 77 corresponds to the lower part of the side surface 52 in shape and size in the left-right direction. In a sectional view, the side cover 23 is provided on the left of the left joint 32 and the side cover 23 is provided on the right of the right joint 32.

In Figure 5, the part of the lower part of the side surface 52 of the first panel 41 having the largest distance in the left-right direction corresponds to the positions of the outer surfaces of the tank frames 12 and the rear frames 13 in the left-right direction. More specifically, there is only a narrow step in the left-right direction between the part of the lower part of the side surfaces 52 of the first panel 41 having the largest distance in the left-right direction and the outer surfaces of the tank frames 12 and the rear frames 13 in the left-right direction. Therefore, when the side covers 23 are attached to the tank frames 12 and the rear frames 13, the step between the side surface 52 of the first panel 41 and the side cover 23 can be reduced.

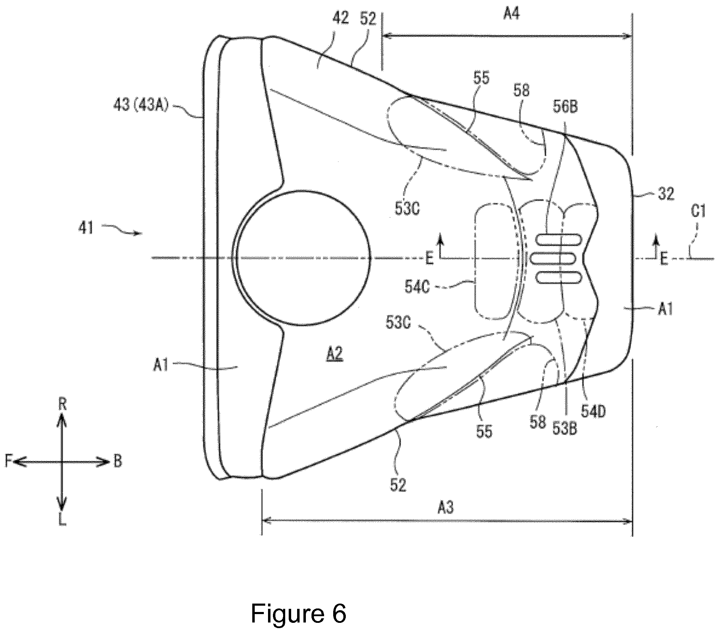

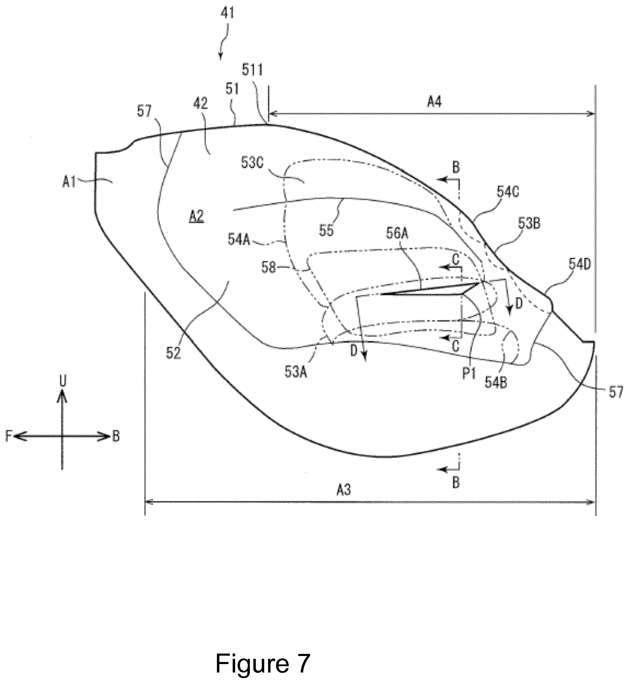

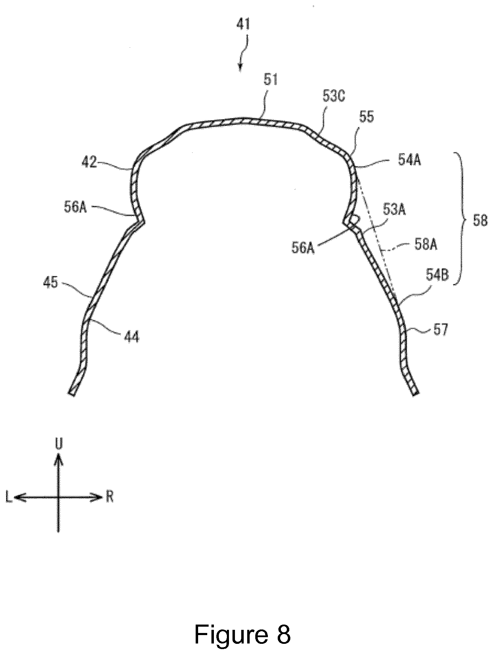

The first panel 41 will be described in detail. Figure 6 is a plan view of the first panel 41. Figure 7 is a left side view of the first panel 41. Figure 8 is a rear sectional view taken along line B-B in Figure 7.

The side surface 52 of the first panel 41 will be described first. As shown in Figure 6, the pair of the side surfaces 52 of the first panel 41 has the third region A3 having a width in the left-right direction gradually reduced from the front part to the rear part of the first panel 41. The third region A3 partly overlaps the second region A2 that is visible in the appearance of the motorcycle 100.

As shown in Figure 7, the side surface 52 has a convex surface 54A corresponding to a first convex surface according to the invention, a convex surface 54B corresponding to a second convex surface according to the invention, and a concave surface 53A in the third region A3. Here, the convex surface refers to a curved surface formed by a raised part of the outer surface 45 of the first panel 41. The concave surface refers to a curved surface formed by a recessed part of the outer surface 45 of the first panel 41.

The convex surfaces 54A and 54B extend in the front-back direction of the third region A3 in a side view. The convex surface 54B is formed under, e.g. beneath, the convex surface 54A in a side view. The convex surfaces 54A and 54B each have a width in the up-down direction and are formed backward from the front part of the third region A3.

The concave surface 53A is formed between the convex surfaces 54A and 54B in a side view. The concave surface 53A is continuous with the convex surfaces 54A and 54B. The concave surface 53A extends in the front-back direction of the third region A3 in a side view. The concave surface 53A has a width in the up-down direction and is formed backward from the front part of the third region A3.

A side recess 58 is formed by a part of the convex surface 54A, a part of the convex surface 54B, and a part of the concave surface 53A.

The side recess 58 extends backward from the center part of the side surface 52 in a side view. The side recess 58 is formed in a position corresponding to the inner side of a femoral region of the rider seated on the seat 19 of the motorcycle 100. More specifically, while the fuel tank 30 is provided in the motorcycle 100, the side recess 58 is formed ahead or forwardly of the front end of the seat 19 (see Figure 4). The side recess 58 is formed in a position equal to the height of the seating surface 191 at the front end of the seat 19 (see Figure 5) or in a higher position. The side recesses 58 are formed in symmetry in a plan view (see Figure 6).

Referring back to Figure 7, the first panel main body 42 further has a concave surface 53C and a ridge 55. The concave surface 53C is formed above the convex surface 54A in a side view. The concave surface 53C extends in the front-back direction of the first panel main body 42. The concave surface 53C forms a part of the upper surface 51 of the first panel main body 42.

The ridge 55 is a convex surface that connects the concave surface 53C and the convex surface 54A. The ridge 55 is positioned at a boundary between the upper surface 51 and the side surface 52 of the first panel main body 42. The ridge 55 extends in the front-back direction of the first panel main body 42. A rear part of the ridge 55 is inclined downward. The ridge 55 has a smaller radius of curvature than those of the convex surface 54A and the concave surface 53C and can be recognized as a curve extending in the front-back direction in a side view.

The bent part 56A is formed at the concave surface 53A. The bent part 56A is formed to reduce wrinkles generated at the concave surface 53A when the first panel 41 is produced by press-molding. The bent part 56A according to the embodiment is formed in a recessed shape at the outer surface 45 of the concave surface 53A. The bent part 56A extends in the front-back direction behind the center part of the side surface 52 in a side view.

Here, as shown in Figure 6, in the first panel 41, the distance between the pair of side surfaces 52 in the left-right direction gradually decreases behind the center part of the side surfaces 52 in a plan view. As shown in Figure 7, in a side view, the height of the upper surface 51 in the up-down direction gradually decreases behind the middle part 511. More specifically, at the side surfaces 52 of the first panel 41, the plurality of concave and convex surfaces are in close proximity at the part behind the center part in a plan view and a side view. Therefore, the side surfaces 52 are formed by more complicated surfaces at the rear part than at the center part. When the first panel 41 is produced by press-molding, wrinkles are more likely to be generated at the rear part than at the center part of the concave surface 53A. The bent part 56A is preferably formed behind the center part of the concave surface 53A in order to reduce wrinkles generated at the concave surface 53A.

The bent part 56A formed at the concave surface 53A is formed at the side recess 58. The bent part 56A reduces wrinkles generated at the concave surface 53A. Therefore, preferably, the bent parts 56A are formed ahead of the front end of the seat 19 and in a position symmetrical with respect to a center line extending in the front-back direction of the motorcycle 100 in a side view and a plan view of the motorcycle 100. In addition, the bent part 56A is preferably formed above the seating surface 191 at the front end of the seat 19.

As shown in Figure 8, the side surface 52 has the convex surface 54A, the convex surface 54B, and the concave surface 53A. The convex surface refers to a curved surface formed by a raised part of the outer surface 45 of the first panel 41 in a sectional view. The concave surface refers to a curved surface formed by a recessed part of the outer surface 45 of the first panel 41 in a sectional view.

The convex surface 54B is formed under the convex surface 54A in a rear sectional view in Figure 8. The concave surface 53A is formed in a position to connect the convex surface 54A and the convex surface 54B in a rear sectional view.

The first panel main body 42 has the concave surface 53C and the ridge 55. The concave surface 53C is formed above the convex surface 54A in a rear sectional view. The concave surface 53C forms a part of the upper surface 51 of the first panel main body 42. The ridge 55 connects the concave surface 53C and the convex surface 54A. The ridge 55 is positioned at a boundary between the upper surface 51 and the side surface 52 of the first panel main body 42 in a rear sectional view. The ridge 55 has a radius of curvature smaller than those of the convex surface 54A and the concave surface 53C.

The side recess 58 is formed by a part of the convex surface 54A, a part of the convex surface 54B, and a part of the concave surface 53A. More specifically, the concave surface 53A is formed in a recessed position with respect to a virtual line 58A connecting the apex of the convex surface 54A and the apex of the convex surface 54B in a rear sectional view.

Now, the upper surface 51 of the first panel 41 will be described. As shown in Figure 7, the upper surface 51 of the first panel 41 has a fourth region A4 in which the height in the up-down direction gradually decreases. The fourth region A4 partly overlaps the second region A2 that is visible in the outer appearance of the motorcycle 100.

As shown in Figure 6, in the fourth region A4, the upper surface 51 has a convex surface 54C corresponding to a first convex surface according to the invention, a convex surface 54D corresponding to a second convex surface according to the invention, and a concave surface 53B. The convex surface 54D is positioned behind the convex surface 54C. The convex surfaces 54C and 54D extend or are elongated in the left-right direction in the fourth region A4. In other words, in a plan view, the convex surfaces 54C and 54D have a width in the front-back direction and are formed from the left to the right in the fourth region A4. According to the embodiment, the convex surfaces 54C and 54D are formed in symmetry with respect to a virtual center line C1 of the upper surface 51 that extends in the front-back direction.

The concave surface 53B is formed between the convex surfaces 54C and 54D. The concave surface 53B is continuous with the convex surfaces 54C and 54D. The concave surface 53B extends or is elongated in the left-right direction in the fourth region A4. More specifically, in a plan view, the concave surface 53B has a width in the front-back direction and is formed from the left to the right in the fourth region A4. According to the embodiment, the concave surface 53B is formed in symmetry with respect to the virtual center line C1 of the upper surface 51 that extends in the front-back direction.

The concave surface 53B has the bent part 56B. The bent part 56B is formed to reduce wrinkles generated at the concave surface 53B when the first panel 41 is produced by press-molding. The bent part 56B is formed in a recessed shape at the outer surface 45 of the concave surface 53B.

### Bent Part

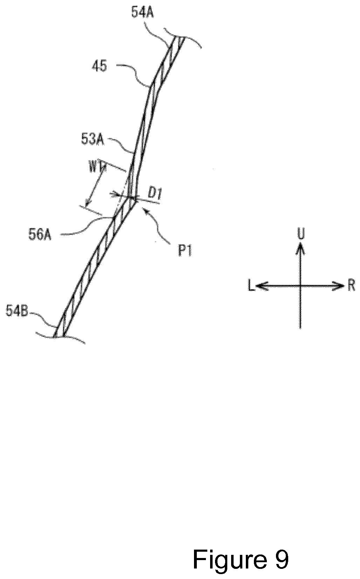

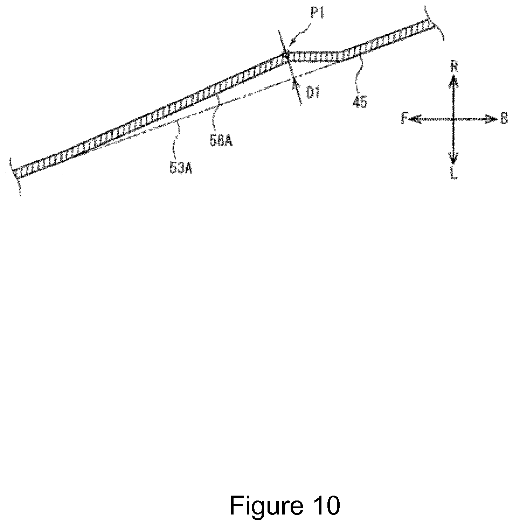

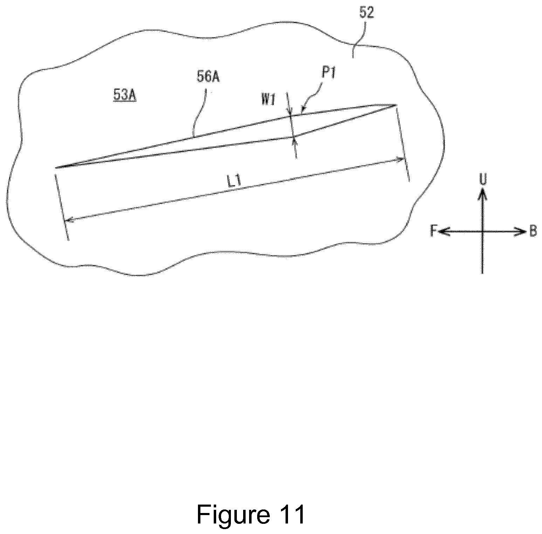

Now, the shape of the bent part 56A will be described in detail. Figure 9 is a rear sectional view taken along line C-C in Figure 7. Figure 10 is a top sectional view taken along line D-D in Figure 7. Figure 11 is an enlarged view of the bent part 56A.

As shown in Figure 9, the bent part 56A according to the embodiment is formed in a recessed shape at the outer surface 45 of the concave surface 53A. More specifically, in a rear sectional view, the sectional shape is substantially a sideways V shape. Stated differently, the sectional shape has its length in the up-down direction reduced toward the farthest position in the left-right direction. The virtual line (chain double-dashed line) represents the position of the outer surface 45 of the concave surface 53A when the bent part 56A is not formed. The maximum distance D1 (deformation) between the position of the outer surface 45 indicated by the virtual line and the deepest position of the bent part 56A is smaller than the size W1 of the bent part 56A in the up-down direction (widthwise direction). More specifically, the depth-wise deformation of the bent part 56A is smaller than the size of the bent part in the up-down direction (widthwise direction). Therefore, in a side view, the bent part 56A is formed in the second region A2 that is visible in the appearance of the fuel tank 30 and the motorcycle 100 but the part is not much noticeable and does not affect the appearance of the fuel tank 30 very much. The bent part 56A is formed at the deepest position of the concave surface 53A, in other words, at the most recessed position with respect to the convex surfaces 54A and 54B and is therefore hardly noticeable.

As shown in Figure 10, the bent part 56A has a part where its deformation is greater toward the ridge 55 and smaller away from the ridge 55 in a top sectional view. More specifically, the position P1 where the degree of deformation attains a maximum value D1 is behind the center part of the bent part 56A in the lengthwise direction. The position is closer to the ridge 55 than to the center part of the bent part 56A in the lengthwise direction. Note that the position where the deformation attains a maximum value may be provided more on the rear side of the bent part 56A. In this way, the position corresponding to the maximum deformation value can be even closer to the ridge 55.

As shown in Figure 11, the size L1 of the bent part 56A in the front-back direction (lengthwise direction) is longer than the maximum size W1 in the up-down direction (widthwise direction) in a side view. The front part and the rear part of the bent part 56A are in a tapered shape. The front part and the rear part of the bent part 56A have their sizes in the up-down direction (widthwise direction) gradually reduced toward the ends. The position P1 where the size in the up-down direction (widthwise direction) is maximized is behind the center part of the bent part 56A in the front-back direction (lengthwise direction).

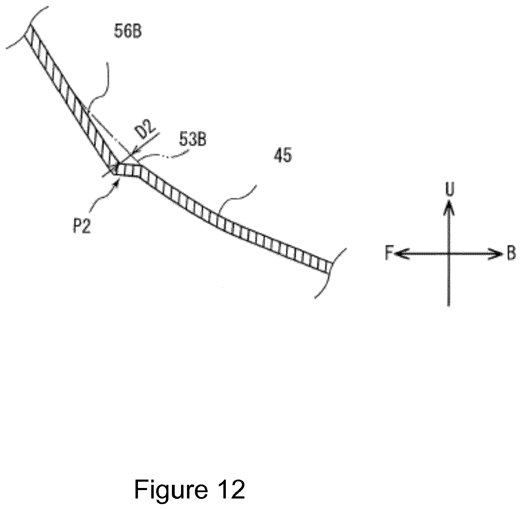

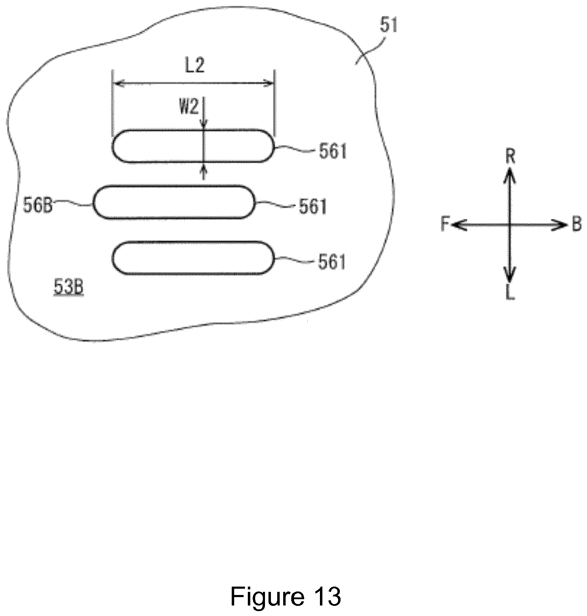

Now, the shape of the bent part 56B will be described. Figure 12 is a side sectional view taken along line E-E in Figure 6. Figure 13 is an enlarged view of the bent part 56B.

As shown in Figure 12, the bent part 56B is formed in a recessed shape at the outer surface 45 of the concave surface 53B. The virtual line (chain double-dashed line) represents the position of the outer surface 45 when the bent part 56B is not formed. The distance D2 (deformation) between the position of the outer surface 45 indicated by the virtual line and the deepest position of the bent part 56B is smaller than the size W2 of the bent part 56B in the left-right direction (widthwise direction),e.g. see Figure 13). More specifically, the depth-wise deformation of the bent part 56B is smaller than the size in the left-right direction (widthwise direction). The depth-wise deformation is smaller at the front part in the front-back direction. The bent part 56B has the deepest position P2 on the side of the rear part.

As shown in Figure 13, the bent part 56B has a plurality of recesses 561 arranged in the left-right direction. The size L2 of the recess 561 in the front-back direction (lengthwise direction) is larger than the maximum size W2 in the left-right direction (widthwise direction). The width of the recess 561 in the left-right direction is constant and the recess 561 has an elliptical shape in a plan view.

Now, referring to Figure 2, general features of a method of manufacturing the fuel tank 30 will be described.

As described above, the first panel 41 is formed by press-molding using a sheet of an aluminum-based material. A specific shape of the first panel 41 is as described above. When the first panel 41 is produced by press-molding, the bent parts 56A and 56B are formed at the same time in order to reduce wrinkles at the first panel 41. The first panel 41 according to the embodiment is formed by press-molding using a single sheet of an aluminum-based material.

A sheet of Al (pure aluminum), an Al-Mg-based alloy, or an Al-Si-Mg-based alloy is preferably used for forming the first panel 41 in consideration of strength and workability.

The first panel 41 preferably has a reduced thickness in order to reduce the weight of the fuel tank 30. The thickness of the first panel 41 is determined in consideration of workability and strength required for the fuel tank 30.

The second panel 61 is produced by press-molding a sheet of an aluminum-based material as described above. A specific shape of the second panel 61 is as described above.

A sheet of Al (pure aluminum), an Al-Mg-based alloy, or an Al-Si-Mg-based alloy is preferably used for forming the second panel 61 in consideration of strength and workability similarly to the first panel 41.

The second panel 61 preferably has a reduced thickness in order to reduce the weight of the fuel tank 30. The thickness of the second panel 61 is determined in consideration of workability and strength required for the fuel tank 30.

As shown in Figure 2, the press-molded, first and second panels 41 and 61 are combined with each other while the first and second flanges 43 and 63 are opposed.

The first and second panels 41 and 61 are put together as they are combined with each other by welding the edges of the first and second flanges 43 and 63 together entirely around the periphery.

### Advantages of the Embodiment

The motorcycle 100 according to the embodiment described above includes the vehicle body frame 10, the fuel tank 30 attached to the vehicle body frame 10, the covers 22 and 23 that cover a part of the fuel tank 30, and the seat 19 attached to the vehicle body frame 10 to cover a part of the rear part of the fuel tank 30. The fuel tank 30 has the panel 41 produced by press-molding using a sheet of an aluminum-based material and forming a space for storing fuel. The panel 41 has the first region A1 covered with the covers 22 and 23 and the seat 19 in a side view and a plan view of the motorcycle 100 and the second region A2 not covered with the covers 22 and 23 and the seat 19 and visible in the outer appearance of the motorcycle 100 in a side view and a plan view of the motorcycle 100. The second region A2 includes the concave surface 53A at the outer surface, the convex surfaces 54A and 54B adjacent to the concave surface 53A at the outer surface, and the bent part 56A that at least partly overlaps the concave surface 53A and formed in a recessed shape at the outer surface of the concave surface 53A. The second region A2 also includes the concave surface 53B at the outer surface, the convex surfaces 54C and 54D adjacent to the concave surface 53B at the outer surface, and the bent part 56B that at least partly overlaps the concave surface 53B and formed in a recessed shape at the outer surface of the concave surface 53B.

The bent part 56A at least partly overlaps the concave surface 53A and therefore the outer surface 45 of the first panel 41 has an increased surface area in the part having the bent part 56A. The bent part 56B at least partly overlaps the concave surface 53B and therefore the outer surface 45 of the first panel 41 has an increased surface area in the part having the bent part 56B. The presence of the bent parts 56A and 56B allows the outer surface 45 of the first panel 41 to be easily stretched in press-molding process. Therefore, wrinkles generated at the outer surface 45 of the first panel 41 can be reduced. Wrinkles at the outer surface of the fuel tank 30 can be reduced, so that the straddled vehicle 100 may have an improved appearance and/or finish.

The fuel tank 30 in the motorcycle 100 according to the embodiment has the convex surface 54A, the concave surface 53C, and the ridge 55 that connects the convex surface 54A and the concave surface 53C. The concave surface 53A has the part adjacent to the ridge 55. The bent part 56A has the part where its deformation near the ridge 55 is greater than the deformation apart from the ridge 55.

Wrinkles are easily generated in press-molding process since the concave surface 53A adjacent to the ridge 55 has much planar change. In the fuel tank 30, the bent part 56A has the part having greater deformation near the ridge 55 than apart from the ridge 55. Therefore, the deformation of the bent part 56A may be increased at the part where wrinkles are more likely, so that wrinkles may be reduced intensively. At the part where wrinkles are less likely, the deformation of the bent part 56A may be reduced, so that the bent part 56A may be less noticeable.

The fuel tank 30 in the motorcycle 100 according to the embodiment includes the convex surfaces 54A and 54B and the concave surface 53A formed to connect the convex surfaces 54A and 54B. The fuel tank also includes the convex surfaces 54C and 54D and the concave surface 53B formed to connect the convex surfaces 54C and 54D.

The concave surface 53A that connects the convex surfaces 54A and 54B has much planar change and is therefore likely to have wrinkles in press-molding process. The concave surface 53B that connects the convex surfaces 54C and 54D also has much planar change and is therefore likely to have wrinkles in press-molding process. The fuel tank 30 according to the embodiment has the bent part 56A at the concave surface 53A and the bent part 56B at the concave surface 53B. Therefore, wrinkles generated at the outer surface 45 of the first panel 41 can be reduced.

The motorcycle 100 according to the embodiment has the first panel 41 that forms the upper part of the space in the fuel tank 30 for storing fuel. The first panel 41 has the upper surface 51 and the pair of side surfaces 52 continuous with the upper surface 51. The pair of side surfaces 52 has the convex surfaces 54A and 54B and the concave surface 53A that connects the convex surfaces 54A and 54B. The bent part 56A is formed at the concave surface 53A.

At the side surface 52 of the first panel 41, the concave surface 53A that connects the convex surfaces 54A and 54B has much planar change and is therefore likely to have wrinkles in press-molding process. The first panel 41 of the fuel tank 30 has the bent part 56A at the concave surface 53A. Therefore, wrinkles generated at the outer surface 45 of the first panel 41 can be reduced.

In the motorcycle 100 according to the embodiment, the first panel 41 that forms the fuel tank 30 has the side recess 58 defined by a part of the convex surface 54A, a part of the convex surface 54B, and the concave surface 53A. The bent part 56A is formed at the concave surface 53A.

In the motorcycle 100 according to the embodiment, the side recesses 58 of the fuel tank 30 are formed ahead of the front end of the seat 19 and positioned in symmetry with respect to a center line that extends in the front-back direction of the motorcycle 100. The bent parts 56A are formed in a symmetrical position with respect to the center line extending in the front-back direction of the motorcycle 100.

In the motorcycle 100 according to the embodiment, the first panel 41 of the fuel tank 30 has the convex surface 54C, the convex surface 54D positioned more on the side of the rear end with respect to the convex surface 54C, and the concave surface 53B that connects the convex surfaces 54C and 54D. The bent part 56B is formed at the concave surface 53B.

At the upper surface 51 of the first panel 41, the concave surface 53B that connects the convex surfaces 54C and 54D has much planar change and is likely to have wrinkles in press-molding process. The first panel 41 of the fuel tank 30 has the bent part 56B at the concave surface 53B. Therefore, wrinkles generated at the outer surface 45 of the first panel 41 can be reduced.

In the motorcycle 100 according to the embodiment, the bent part 56B formed in the fuel tank 30 has a plurality of recesses 561 arranged or distributed in the left-right direction. The size L2 of the recess 561 in the front-back direction is greater than the size W2 in the left-right direction.

The presence of the plurality of recesses 561 can increase the surface area of the outer surface 45 of the first panel 41. The recesses 561 can be formed in a wide area. Therefore, wrinkles can be reduced in the wide area.

The straddled vehicle according to the invention is not limited to the embodiment described above.

For example, the shape of the fuel tank 30 is not limited to the shape according to the embodiment. The tank may have an outer shape different from the shown shape.

The shapes, positions, numbers, and the like of the bent parts 56A and 56B formed at the first panel 41 may be different from the above for example in consideration of the design of a straddled vehicle or the layout of components.

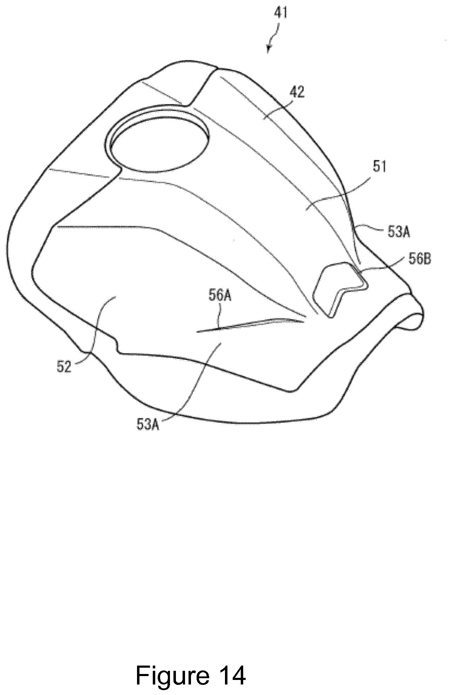

According to the embodiment, the bent parts 56A and 56B are in a recessed shape but they may be in a raised shape. The bent part 56B has the plurality of recesses 561 but the bent part 56B may be provided as a single recess as shown in Figure 14.

According to the above-described embodiment, the straddled vehicle is the touring motorcycle 100, but the straddled vehicle may be a motorcycle other than the touring motorcycle or a three-wheeled or four-wheeled straddled vehicle.

The embodiments of the present invention have been described but the same is only exemplary illustration of how the present invention is carried out. Therefore, the invention is not limited by the description of the embodiments and modifications may be made to the above-described embodiments without departing the scope of the invention as defined by the appended claims. It will be appreciated that the term straddled vehicle or motor vehicle used herein, and as used in the art, is meant to include the following terms also used in the art:
straddle-type vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A fuel tank (30) for a straddled vehicle (100), the fuel tank (30) being an aluminum based fuel tank; wherein:
the fuel tank (30) comprises a panel (41) formed by press-molding using a sheet of an aluminum-based material, the panel (41) being configured to form a space for storing fuel;
the panel (41) having a first region (A1) and a second region (A2);
the second region (A2) being configured to be visible in an outer appearance of the straddled vehicle (100) in a side view and a plan view of the straddled vehicle, in use;
the second region (A2) comprising:
a concave surface (53A) at, in or on an outer surface thereof;
a convex surface (54A, 54B) adjacent to the concave surface (53A) at the outer surface; the fuel tank (30) being **characterised in that** a bent part (56A) is formed at the concave surface (53A), the bent part (56A) being formed in a recessed or raised shape at, in or on the outer surface of the concave surface (53a) to reduce wrinkles generated at the concave surface (53A) when the panel (41) is produced by press-molding.

2. A straddled vehicle (100), comprising:
a vehicle body frame;
the aluminum fuel tank (30) of claim 1;
a cover (22, 23) provided to cover a part of the aluminum fuel tank (30); and
a seat (19) attached to the vehicle body frame to cover a part of a rear part of the aluminum fuel tank (30),
wherein the aluminum fuel tank (30) is attached to the vehicle body frame;
wherein the first region (A1) is covered with the cover (22, 23) and the seat (19) in a side view and a plan view of the straddled vehicle (100); and
wherein the second region (A2) is not covered with the cover (22, 23) and the seat (19).

3. The straddled vehicle (100) according to claim 2, wherein the second region (A2) further has a plurality of curved surfaces (53C,54A) and a ridge (55) that connects the plurality of curved surfaces (53C,54A),
the concave surface (53A) has a part toward, proximate or adjacent to the ridge (55), and
the bent part (56A) has a part having greater deformation near the ridge than away from the ridge.

4. The straddled vehicle (100) according to claim 2 or 3, wherein the second region (A2) comprises first and second convex surfaces (54A,54B) that form the convex surface, and
the concave surface (53A) is formed to connect the first and second convex surfaces (54A,54B).

5. The straddled vehicle (100) according to claim 4, wherein the panel (41) has a first panel that forms an upper part of the space of the aluminum fuel tank (30) for storing fuel,
the first panel has an upper surface (51) and a pair of side surfaces (52) continuous with the upper surface (51),
the side surfaces (52) are opposed in a first direction, wherein a second direction is orthogonal to the first direction,
the pair of side surfaces has a third region (A3) that has a size in the first direction reduced from one end to the other end of the first panel (41) in the second direction and at least partly overlaps the second region (A2),
the third region (A3) has the first convex surface (54A), the second convex surface (54B) positioned under the first convex surface (54A), and the concave surface (53A) that connects the first and second convex surfaces (54A,54B), and
the bent part (56A) is formed at the concave surface (53A).

6. The straddled vehicle (100) according to claim 5, wherein the third region (A3) has a side recess (58) formed by a part of the first convex surface (54A), a part of the second convex surface (54B), and a part of the concave surface (53A), and
the bent part (56A) is formed at the side recess (58).

7. The straddled vehicle (100) according to claim 6, wherein when the first direction corresponds to a left-right direction of the straddled vehicle (100), and the second direction corresponds to a front-back direction of the straddled vehicle (100),
the side recess (58) is formed ahead of a front end of the seat (19) and in a symmetrical position with respect to a center line (C1) extending in the front-back direction of the straddled vehicle (100) in a side view and a plan view of the straddled vehicle (100), and
the bent part (56A) is formed in a symmetrical position with respect to the center line extending in the front-back direction of the straddled vehicle (100).

8. The straddled vehicle (100) according to claim 4, wherein the panel (41) has a first panel (41) that forms an upper part of the space of the aluminum fuel tank (30) for storing fuel,
the first panel (41) has an upper surface (51) and a pair of side surfaces (52) continuous with the upper surface (51),
the side surfaces (52) are opposed in a first direction,
a second direction is orthogonal to the first direction,
the upper surface (51) has a fourth region (A4) having a size in an up-down direction reduced from one end to the other end of the first panel (41) in the second direction and at least partly overlapping the second region (A2),
the fourth region (A4) has the first convex surface (54A), the second convex surface (54B) positioned nearer to said other end with respect to the first convex surface (54A), and the concave surface (53A) that connects the first convex surface (54A) and the second convex surface (54B), and
the bent part (56A) is formed at the concave surface (53A).

9. The straddled vehicle (100) according to claim 8, wherein the bent part (56A) has a plurality of recesses arranged in the first direction, and the recess has a greater size in the first direction than in the second direction.

10. The straddled vehicle (100) according to any of claims 2 to 9, wherein the panel comprises a stepped part (57) formed at least partly or entirely around a main body (42) of the panel (41), wherein, at the stepped part (57), an outer surface of the first panel main body (42) changes stepwise.

11. The straddled vehicle (100) according to claim 5, claim 8 or any claim dependent thereon, wherein at least one or each of the side surfaces (52) comprises a center part at the center of the respective side surface (52) in a side view or forward/back direction, and the concave and/or convex surface (53A, 54A, 54B) are provided behind, directly behind and/or rearwardly of the center part in a plan view and/or a side view of the vehicle (100).

12. The straddled vehicle (100) according to any of claims 2 to 11, wherein the bent part (56A) is formed at, in or on the deepest position of the concave surface (53A).

## Patentansprüche

1. Kraftstofftank (30) für ein Reitsitz-Fahrzeug (100), wobei der Kraftstofftank (30) ein Kraftstofftank auf Aluminiumbasis ist, wobei:
der Kraftstofftank (30) eine Platte (41) umfasst, die durch Pressformen unter Verwendung einer Bahn eines Werkstoffs auf Aluminiumbasis geformt ist, wobei die Platte (41) dafür konfiguriert ist, einen Raum zum Unterbringen von Kraftstoff zu bilden,
die Platte (41) einen ersten Bereich (A1) und einen zweiten Bereich (A2) hat,
der zweite Bereich (A2) dafür konfiguriert ist, bei Betrieb, in einer Seitenansicht und einer Draufsicht des Reitsitz-Fahrzeugs in einem äußeren Erscheinungsbild des Reitsitz-Fahrzeugs (100) sichtbar zu sein,
der zweite Bereich (A2) Folgendes umfasst:
eine konkave Fläche (53A) an, in oder auf einer Außenfläche desselben,
eine konvexe Fläche (54A, 54B) angrenzend an die konkave Fläche (53A) an der Außenfläche, wobei der Kraftstofftank (30) **dadurch gekennzeichnet ist, dass** ein gebogener Teil (56A) an der konkaven Fläche (53A) geformt ist, wobei der gebogene Teil (56A) in einer eingezogenen oder erhöhten Form an, in oder auf der Außenfläche der konkaven Fläche (53A) geformt ist, um Falten zu verringern, die an der konkaven Fläche (53A) erzeugt werden, wenn die Platte (41) durch Pressformen geformt wird.

2. Reitsitz-Fahrzeug (100), das Folgendes umfasst:
einen Fahrzeug-Aufbaurahmen,
den Aluminium-Kraftstofftank (30) nach Anspruch 1,
eine Abdeckung (22, 23), die bereitgestellt wird, um einen Teil des Aluminium-Kraftstofftanks (30) abzudecken, und
einen Sitz (19), der an dem Fahrzeug-Aufbaurahmen befestigt ist, um einen Teil eines hinteren Teils des Aluminium-Kraftstofftanks (30) abzudecken,
wobei der Aluminium-Kraftstofftank (30) an dem Fahrzeug-Aufbaurahmen befestigt ist,
wobei der erste Bereich (A1) in einer Seitenansicht und einer Draufsicht des Reitsitz-Fahrzeugs (100) mit der Abdeckung (22, 23) und dem Sitz (19) abgedeckt ist und
wobei der zweite Bereich (A2) nicht mit der Abdeckung (22, 23) und dem Sitz (19) abgedeckt ist.

3. Reitsitz-Fahrzeug (100) nach Anspruch 2, wobei der zweite Bereich (A2) ferner mehrere gekrümmte Flächen (53C, 54A) und einen Steg (55), der die mehreren gekrümmten Flächen (53C, 54A) verbindet, hat,
die konkave Fläche (53A) einen Teil zu dem, nahe dem oder angrenzend an den Steg (55) hat und
der gebogene Teil (56A) einen Teil mit einer größeren Verformung nahe dem Steg als entfernt von dem Steg hat.

4. Reitsitz-Fahrzeug (100) nach Anspruch 2 oder 3, wobei der zweite Bereich (A2) eine erste und eine zweite konvexe Fläche (54A, 54B) umfasst, welche die konvexe Fläche bilden, und
die konkave Fläche (53A) dafür geformt ist, die erste und die zweite konvexe Fläche (54A, 54B) zu verbinden.

5. Reitsitz-Fahrzeug (100) nach Anspruch 4, wobei die Platte (41) eine erste Platte hat, die einen oberen Teil des Raums des Aluminium-Kraftstofftanks (30) zum Unterbringen von Kraftstoff bildet,
die erste Platte eine obere Fläche (51) und ein Paar von Seitenflächen (52), die mit der oberen Fläche (51) durchgehend sind, hat,
die Seitenflächen (52) in einer ersten Richtung gegenüberliegend sind, wobei eine zweite Richtung senkrecht zu der ersten Richtung ist,
das Paar von Seitenflächen einen dritten Bereich (A3) hat, der in der ersten Richtung eine Abmessung hat, die von dem einen Ende zu dem anderen Ende der ersten Platte (41) in der zweiten Richtung verringert ist, und den zweiten Bereich (A2) wenigstens teilweise überlappt,
der dritte Bereich (A3) die erste konvexe Fläche (54A), die zweite konvexe Fläche (54B), die unter der ersten konvexen Fläche (54A) angeordnet ist, und die konkave Fläche (53A), welche die erste und die zweite konvexe Fläche (54A, 54B) verbindet, hat und
der gebogene Teil (56A) an der konkaven Fläche (53A) geformt ist.

6. Reitsitz-Fahrzeug (100) nach Anspruch 5, wobei der dritte Bereich (A3) eine Seitenaussparung (58) hat, die durch einen Teil der ersten konvexen Fläche (54A), einen Teil der zweiten konvexen Fläche (54B) und einen Teil der konkaven Fläche (53A) gebildet wird, und
der gebogene Teil (56A) an der Seitenaussparung (58) geformt ist.

7. Reitsitz-Fahrzeug (100) nach Anspruch 6, wobei, wenn die erste Richtung einer Links-Rechts-Richtung des Reitsitz-Fahrzeugs (100) entspricht und die zweite Richtung einer Vorn-Hinten-Richtung des Reitsitz-Fahrzeugs (100) entspricht,
die Seitenaussparung (58) in einer Seitenansicht und einer Draufsicht des Reitsitz-Fahrzeugs (100) vor einem vorderen Ende des Sitzes (19) und in einer symmetrischen Position in Bezug auf eine Mittellinie (C1), die sich in der Vorn-Hinten-Richtung des Reitsitz-Fahrzeugs (100) erstreckt, geformt ist und
der gebogene Teil (56A) in einer symmetrischen Position in Bezug auf die Mittellinie, die sich in der Vorn-Hinten-Richtung des Reitsitz-Fahrzeugs (100) erstreckt, geformt ist.

8. Reitsitz-Fahrzeug (100) nach Anspruch 4, wobei die Platte (41) eine erste Platte (41) hat, die einen oberen Teil des Raums des Aluminium-Kraftstofftanks (30) zum Unterbringen von Kraftstoff bildet,
die erste Platte (41) eine obere Fläche (51) und ein Paar von Seitenflächen (52), die mit der oberen Fläche (51) durchgehend sind, hat,
die Seitenflächen (52) in einer ersten Richtung gegenüberliegend sind,
eine zweite Richtung senkrecht zu der ersten Richtung ist,
die obere Fläche (51) einen vierten Bereich (A4) hat, der in einer Aufwärts-Abwärts-Richtung eine Abmessung hat, die von dem einen Ende zu dem anderen Ende der ersten Platte (41) in der zweiten Richtung verringert ist, und den zweiten Bereich (A2) wenigstens teilweise überlappt,
der vierte Bereich (A4) die erste konvexe Fläche (54A), die zweite konvexe Fläche (54B), die näher zu dem anderen Ende in Bezug auf die erste konvexe Fläche (54A) angeordnet ist, und die konkave Fläche (53A), welche die erste konvexe Fläche (54A) und die zweite konvexe Fläche (54B) verbindet, hat und
der gebogene Teil (56A) an der konkaven Fläche (53A) geformt ist.

9. Reitsitz-Fahrzeug (100) nach Anspruch 8, wobei der gebogene Teil (56A) mehrere Aussparungen hat, die in der ersten Richtung angeordnet sind, und die Aussparung eine größere Abmessung in der ersten Richtung als in der zweiten Richtung hat.

10. Reitsitz-Fahrzeug (100) nach einem der Ansprüche 2 bis 9, wobei die Platte einen abgestuften Teil (57) umfasst, der wenigstens teilweise oder gänzlich um einen Hauptkörper (42) der Platte (41) geformt ist, wobei, an dem abgestuften Teil (57), sich eine Außenfläche des ersten Hauptkörpers (42) stufenweise ändert.

11. Reitsitz-Fahrzeug (100) nach Anspruch 5, Anspruch 8 oder einem von denselben abhängigen Anspruch, wobei wenigstens eine oder jede der Seitenflächen (52) einen Mittelteil an der Mitte der jeweiligen Seitenfläche (52) in einer Seitenansicht oder Vorwärts-Rückwärts-Richtung umfasst und in einer Draufsicht und/oder einer Seitenansicht des Fahrzeugs (100) die konkave und/oder konvexe Fläche (53A, 54A, 54B) hinter, unmittelbar hinter und/oder rückwärtig von dem Mittelteil bereitgestellt werden.

12. Reitsitz-Fahrzeug (100) nach einem der Ansprüche 2 bis 11, wobei der gebogene Teil (56A) an, in der auf der tiefsten Position der konkaven Fläche (53A) geformt ist.

## Revendications

1. Réservoir de carburant (30) pour un véhicule monté à califourchon (100), le réservoir de carburant (30) étant un réservoir de carburant à base d'aluminium, dans lequel :
le réservoir de carburant (30) comprend un panneau (41) formé par moulage à la presse en utilisant une tôle d'un matériau à base d'aluminium, le panneau (41) étant conçu pour former un espace pour stocker du carburant,
le panneau (41) comportant une première région (A1) et une seconde région (A2),
la seconde région (A2) étant conçue pour être visible dans l'aspect extérieur du véhicule monté à califourchon (100) dans une vue latérale et une vue de dessus du véhicule monté à califourchon, en service,
la seconde région (A2) comprenant :
une surface concave (53A) au niveau de, dans ou sur une surface extérieure de celle-ci,
une surface convexe (54A, 54B) adjacente à la surface concave (53A) au niveau de la surface extérieure, le réservoir de carburant (30) étant **caractérisé en ce qu'**une partie pliée (56A) est formée au niveau de la surface concave (53A), la partie pliée (56A) étant formée dans une forme renfoncée ou surélevée au niveau de, dans ou sur la surface extérieure de la surface concave (53A) pour réduire des ondulations produites à la surface concave (53A) lorsque le panneau (41) est produit par moulage à la presse.

2. Véhicule monté à califourchon (100) comprenant :
un cadre du corps de véhicule,
le réservoir de carburant en aluminium (30) selon la revendication 1,
un capot (22, 23) agencé pour recouvrir une partie du réservoir de carburant en aluminium (30) et
un siège (19) fixé au cadre du corps du véhicule pour recouvrir une partie d'une partie arrière du réservoir de carburant (30) en aluminium,
dans lequel le réservoir de carburant en aluminium (30) est fixé au cadre du corps du véhicule,
la première région (A1) est recouverte du capot (22, 23) et du siège (19) dans une vue latérale et une vue de dessus du véhicule monté à califourchon (100), et
la seconde région (A2) n'est pas recouverte par le capot (22, 23) ni par le siège (19).

3. Véhicule monté à califourchon (100) selon la revendication 2, dans lequel la seconde région (A2) comporte en plus une pluralité de surfaces courbées (53C, 54A) et une nervure (55) qui relie la pluralité des surfaces courbées (53C, 54A),
la surface concave (53A) comporte une partie vers, à proximité ou adjacente à la nervure (55), et
la partie pliée (56A) comporte une partie présentant une déformation plus grande à côté de la nervure qu'à distance de la nervure.

4. Véhicule monté à califourchon (100) selon la revendication 2 ou 3, dans lequel la seconde région (A2) comprend des première et seconde surfaces convexes (54A, 54B) qui forment la surface convexe, et
la surface concave (53A) est formée pour relier les première et seconde surfaces convexes (54A, 54B).

5. Véhicule monté à califourchon (100) selon la revendication 4, dans lequel le panneau (41) comprend un premier panneau qui forme une partie supérieure de l'espace du réservoir de carburant en aluminium (30) destiné à stocker du carburant,
le premier panneau comporte une surface supérieure (51) et une paire de surfaces latérales (52) continues avec la surface supérieure (51),
les surfaces latérales (52) sont opposées dans une première direction, une seconde direction étant orthogonale à la première direction,
la paire de surfaces latérales comportent une troisième région (A3) qui a une dimension dans la première direction réduite d'une extrémité à l'autre extrémité du premier panneau (41) dans la seconde direction et chevauche au moins en partie la seconde région (A2),
la troisième région (A3) comprend la première surface convexe (54A), la seconde surface convexe (54B) positionnée sous la première surface convexe (54A) et la surface concave (53A) qui relie les première et seconde surfaces convexes (54A, 54B), et
la partie pliée (56A) est formée au niveau de la surface concave (53A).

6. Véhicule monté à califourchon (100) selon la revendication 5, dans lequel la troisième région (A3) comporte un renfoncement latéral (58) formé par une partie de la première surface convexe (54A), une partie de la seconde surface convexe (54B) et une partie de la surface concave (53A), et
la partie pliée (56A) est formée au niveau du renfoncement latéral (58).

7. Véhicule monté à califourchon (100) selon la revendication 6, dans lequel, lorsque la première direction correspond à une direction de gauche à droite du véhicule monté à califourchon (100) et la seconde direction correspond à une direction d'avant à l'arrière du véhicule monté à califourchon (100),
le renfoncement latéral (58) est formé à l'avant d'une extrémité avant du siège (19) et dans une position symétrique par rapport à une ligne centrale (C1) s'étendant dans la direction d'avant en arrière du véhicule monté à califourchon (100) dans une vue latérale et une vue de dessus du véhicule monté à califourchon (100), et
la partie pliée (56A) est formée dans une position symétrique par rapport à la ligne centrale s'étendant dans la direction d'avant en arrière du véhicule monté à califourchon (100).

8. Véhicule monté à califourchon (100) selon la revendication 4, dans lequel le panneau (41) comporte un premier panneau (41) qui forme une partie supérieure de l'espace du réservoir de carburant en aluminium (30) destiné à stocker du carburant,
le premier panneau (41) comporte une surface supérieure (51) et une paire de surfaces latérales (52) continues avec la surface supérieure (51),
les surfaces latérales (52) sont opposées dans une première direction,
une seconde direction est orthogonale à la première direction,
la surface supérieure (51) comprend une quatrième région (A4) ayant une dimension dans une direction de haut en bas réduite d'une extrémité à l'autre du premier panneau (41) dans la seconde direction et chevauchant au moins en partie la seconde région (A2),
la quatrième région (A4) comprend la première surface convexe (54A), la seconde surface convexe (54B) positionnée plus près de ladite autre extrémité par rapport à la première surface convexe (54A) et la surface concave (53A) qui relie la première surface convexe (54A) et la seconde surface convexe (54B), et
la surface pliée (56A) est formée au niveau de la surface concave (53A).

9. Véhicule monté à califourchon (100) selon la revendication 8, dans lequel la partie pliée (56A) comporte une pluralité de renfoncements agencés dans la première direction, et le renfoncement a une dimension plus grande dans la première direction que dans la seconde direction.

10. Véhicule monté à califourchon (100) selon l'une des revendications 2 à 9, dans lequel le panneau comprend une partie étagée (57) formée au moins en partie ou entièrement autour d'un corps principal (42) du panneau (41), dans lequel, sur la partie étagée (57), une surface extérieure du premier corps principal du panneau (42) change par échelon.

11. Véhicule monté à califourchon (100) selon la revendication 5, 8 ou toute revendication dépendant de l'une quelconque de celles-ci, dans lequel au moins une ou chacune des surfaces latérales (52) comprend une partie centrale au centre de la surface latérale respective (52) dans une vue latérale ou dans une direction d'avant en arrière, et la surface concave et/ou convexe (53A, 54A, 54B) sont agencées derrière, directement derrière et/ou à l'arrière de la partie centrale dans une vue de dessus et/ou une vue latérale du véhicule (100).

12. Véhicule monté à califourchon (100) selon l'une des revendications 2 à 11, dans lequel la partie pliée (56A) est formée au niveau de, dans ou sur la position la plus profonde de la surface concave (53A).
